# FASCICULE DE BREVET EUROPEEN

(11) **EP 1 606 125 B1**
(45) Date de publication et mention de la délivrance du brevet: **13.05.2015**
(21) Numéro de dépôt: 04719973.2
(22) Date de dépôt: 12.03.2004
(51) Int. Cl.: B60C 11/13, B60C 19/00

(54) **METHODE DE MONTAGE DE PNEUMATIQUES SUR ENGINS DE GENIE CIVIL**
VERFAHREN ZUM AUFZIEHEN VON REIFEN AUF SCHWERLASTWAGEN
METHOD OF MOUNTING TYRES TO CIVIL ENGINEERING VEHICLES

(30) Priorité: 25.03.2003 FR 0303676
(43) Date de publication de la demande: 21.12.2005
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: VERVAET, Patrick, F-63000 Clermont-Ferrand (FR)
(74) Mandataire: Diernaz, Christian
(86) Numéro de dépôt international: PCT/EP2004/002624
(87) Numéro de publication internationale: WO 2004/085175

(56) Documents cités:
- EP-A- 0 734 887
- EP-A- 1 026 012
- DE-C- 888 654
- US-A- 4 832 099
- US-A- 5 044 414
- US-A- 5 127 455
- US-A- 5 297 604
- US-A- 5 358 022

## Description

La présente invention concerne le domaine des pneumatiques pour engins de travaux génie civil et plus particulièrement les sculptures de tels pneumatiques ; cette invention concerne également une méthode d'équipement d'un véhicule GC avec des pneumatiques permettant selon l'usage dudit véhicule de réduire les usures irrégulières.

On connaît des véhicules de génie civil destinés à transporter des quantités importantes de minerai dans des mines et roulant des conditions sévères et notamment sur des voies à fortes déclivités. Par ailleurs, ces véhicules que l'on nomme tombereaux (Dumper) sont pourvus d'essieu(x) moteur(s) et d'un essieu directeur équipés de pneumatiques de dimensions appropriées. On a constaté que l'usure de ces pneumatiques est fortement conditionnée par le glissement généré par l'effort longitudinal de réaction exercé par le sol sur la bande de roulement lors du passage de couple qu'implique le transport de charges importantes.

On connaît par le document FR 2382348 un pneumatique de type équipant un tracteur agricole comportant sur sa bande de roulement une sculpture formée de barrettes en relief s'étendant sur environ une moitié de la largeur de ladite bande. L'usure irrégulière pouvant survenir sur ce type de sculpture est réduite par la mise en oeuvre d'une solution consistant à prévoir des faces d'attaque et de fuite ayant des angles mesurés par rapport à une perpendiculaire à la surface de roulement qui varient progressivement de la partie médiane de la bande vers les bords ; par ailleurs, l'angle de la face d'attaque diminue en allant vers le bord de la bande tandis que celui de la face de fuite augmente.

Ce document vise essentiellement des pneumatiques pour véhicules travaillant en terrain meuble et devant de temps en temps circuler sur des routes ; ces pneumatiques ne sont pas, comme c'est le cas pour le domaine des pneumatiques de l'invention, sollicités sous des conditions de charge très importantes et très variables pendant leur cycle d'utilisation et par ailleurs les pressions d'utilisation sont en général faible sur sol meuble afin de ne pas provoquer de tassement dudit sol.

Dans le cas visé par l'invention ici présentée, les conditions d'usage sont très différentes puisque les pneumatiques pour véhicules tout terrain de génie civil (GC) sont utilisés pour porter de très lourdes charges imposant de très grandes déformations aux pneumatiques et à leur bande de roulement. Cet usage comporte en alternance avec des parcours à forte charge des parcours sans charge.

Par ailleurs, sur certaines mines on trouve des déclivités importantes qui durcissent encore les conditions de roulage.

On a été conduit à distinguer deux types principaux d'usages :
type A : le véhicule roule en pleine charge sur une pente ascendante et revient par le même itinéraire ; dans ce type d'usage, les pneumatiques sur essieu moteur sont soumis à de forts couples moteur pour la montée et à des couples freineurs pour le retour (dans ce type d'usage, les efforts moteurs prennent une part plus importante que les efforts freineurs).
type V : à l'inverse du type A, le véhicule roule en pleine charge et sous couple freineur sur une pente descendante et remonte la même pente à vide (dans ce type d'usage, les efforts freineurs prennent une part plus importante que les efforts moteurs).

Par analogie, des cycles de roulage, avec et sans charge, effectués sur des sols plats ou quasiment plats sont assimilés à des roulage de type A, l'effort moteur y étant prédominant sur l'effort freineur du fait de la résistance au roulement des pneumatiques.

Le document US-A-5127455 décrit une méthode d'équipement en pneumatiques selon le préembule de la revendication 1. Un objectif de la présente invention consiste à trouver une méthode permettant de déterminer l'équipement d'un engin de génie civil en pneumatiques qui soit le plus favorable d'un point de vue usure (c'est-à-dire qui offre une plus grande durée d'utilisation desdits pneumatiques).

Dans ce but, il est proposé une méthode d'équipement en pneumatiques de chaque essieu moteur d'un véhicule de génie civil portant de lourdes charges afin d'augmenter la durée de vie sur usure desdits pneumatiques, cette méthode selon la revendication 1 consistant à :
choisir des pneumatiques pour ledit véhicule, ces pneumatiques étant pourvus d'une bande de roulement de largeur maximale L dont une surface externe forme une surface de roulement, cette bande étant elle même pourvue d'une sculpture comprenant une pluralité d'éléments de relief délimitant au moins une pluralité de rainures orientées transversalement, chaque rainure transversale étant délimitée par une première face et une seconde face de gomme en vis-à-vis, cette bande de roulement comprenant :
une partie médiane de largeur comprise entre 20 et 50% de la largeur L de la bande de roulement, cette partie pouvant être pourvue de rainures d'orientation générale transversale délimitées par des faces de gomme ayant une même angle d'inclinaison par rapport à une perpendiculaire à la surface de roulement ;
axialement de part et d'autre de la partie médiane, des parties bords comportant chacune une pluralité de rainures transversales, chaque rainure transversale étant délimitées par une première face et une seconde face de gomme, la première face étant inclinée par rapport à une perpendiculaire à la surface de roulement avec un angle différent de l'angle d'inclinaison de la seconde face en vis-à-vis ;
déterminer le type de parcours effectué par ledit véhicule, soit de type A (c'est-à-dire montée en charge sous couple moteur et descente à vide sous couple freineur), soit de type V (c'est-à-dire montée à vide et descente sous charge sous couple freineur) ;
lorsque le tracé est du type A, monter sur chaque essieu moteur des pneumatiques de façon que pour chaque rainure transversale des parties bord de la bande de roulement l'angle d'inclinaison de la face de gomme délimitant chaque rainure transversale entrant la première dans le contact soit inférieur à l'angle d'inclinaison de la face de gomme en vis-à-vis délimitant la même rainure transversale ou
lorsque le tracé est du type V, montage sur chaque essieu moteur des pneumatiques de façon que pour chaque rainure transversale des parties bord de la bande de roulement l'angle d'inclinaison de la face de gomme délimitant ladite rainure transversale entrant la première dans le contact soit supérieur à l'angle d'inclinaison de la face de gomme en vis-à-vis délimitant ladite rainure transversale.

En effet, la charge supportée par la partie bord - c'est-à-dire axialement vers l'extérieur - de la bande de roulement crée, du fait de la différence des angles d'inclinaison entre les faces entrant les premières dans le contact et celles qui en sortent en dernier, un effort longitudinal qui, en suivant les sens de montage prescrits ci-dessus, va se retrancher de l'effort longitudinal produit par le couple moteur transmis par l'essieu sur lequel est monté le pneumatique dans la partie chargée du cycle de façon à réduire le glissement et donc l'usure. Dans la partie déchargée du cycle, les bords étant peu sollicités, l'incidence de cette différence d'angle, bien que générant un effort longitudinal s'additionnant à l'effort générant le glissement, est faible.

Ainsi grâce à cette méthode, il est possible d'optimiser le rendement en usure d'un pneumatique pour engin de génie civil dont l'usage révèle qu'il est plus particulièrement utilisé sur un tracé d'un type plutôt qu'un autre (soit type A soit type V comme précédemment définis) ; ceci est généralement le cas dans des mines où le travail consiste à chercher un minerai dans un filon déterminé et à le déposer dans son site de stockage.

Grâce à la méthode selon l'invention, la partie de la bande de roulement axialement la plus éloignée du plan équatorial est adaptée aux cycles alternant de très faible charge avec ceux de charges très importantes.

En outre, il est proposé une bande de roulement pour pneumatique équipant un véhicule de génie civil portant de lourdes charges, cette bande de roulement de largeur maximale L comprenant une surface externe formant une surface de roulement sur laquelle est formée une sculpture comprenant une pluralité d'éléments de relief délimitant au moins une pluralité de rainures orientées transversalement, chaque rainure transversale étant délimitée par une première face et une seconde face de gomme en vis-à-vis, cette bande de roulement comprenant
une partie médiane de largeur comprise entre 20 et 50% de la largeur L de la bande de roulement ;
axialement de part et d'autre de la partie médiane, des parties bords comportant chacune une pluralité de rainures transversales, chaque rainure transversale étant délimitées par une première face et une seconde face de gomme, la première face étant inclinée par rapport à une perpendiculaire à la surface de roulement avec un angle différent de l'angle d'inclinaison de la seconde face en vis-à-vis.

Dans une autre variante de la méthode selon l'invention, aux caractéristiques précédemment énoncées, la partie médiane est pourvue de rainures d'orientation générale transversale délimitées par des premières et des secondes faces de gomme dont la différence d'inclinaison par rapport à une perpendiculaire à la surface de roulement est inférieure à la différence d'inclinaison entre les premières et les secondes faces de gomme délimitant les rainures transversales sur les bords de ladite bande.

Préférentiellement, la différence entre les inclinaisons des premières et des secondes faces de gomme délimitant les rainures transversales sur les bords de la bande de roulement est comprise entre 5° et 30°.

Une valeur inférieure à 5° ne génère pas un gain suffisamment perceptible ; une valeur supérieure à 30° génère des surfaces d'entaillement très nettement supérieures aux solutions usuelles et conduit à une réduction trop importante de matière à user et donc inévitablement à une durée de vie sur usure insuffisante.

Avantageusement, l'angle moyen des premières faces est compris entre 6° et 12° et l'angle moyen des secondes faces est compris entre 15° et 35°.

Ces angles sont mesurés entre lesdites faces et une perpendiculaire à la surface de roulement.

Des valeurs trop petites peuvent générer un tassement de compression des éléments de sculpture sous forte charge ; une valeur supérieure à 35° nécessite des surfaces d'entaillement très nettement supérieures aux solutions usuelles et conduit à une réduction trop importante de matière à user et donc inévitablement à une durée de vie sur usure insuffisante.

D'autres caractéristiques et avantages de l'invention ressortent de la description faite ci-après en référence aux dessins annexés qui montrent, à titre d'exemples non limitatifs, des formes de réalisation de l'objet de l'invention.
La figure 1 montre, vue en plan, un exemple de sculpture d'une bande de roulement utilisée dans la méthode selon l'invention ;
La figure 2 montre un vue en coupe selon la ligne II-II de la sculpture montrée à figure 1 ;
La figure 3 montre une vue en coupe selon la ligne III-III de la sculpture montrée à figure 1 ;
La figure 4 montre une vue en coupe d'une autre variante de sculpture utilisable dans la méthode selon l'invention selon laquelle l'angle d'une face d'un élément de relief au bord augmente avec la profondeur.

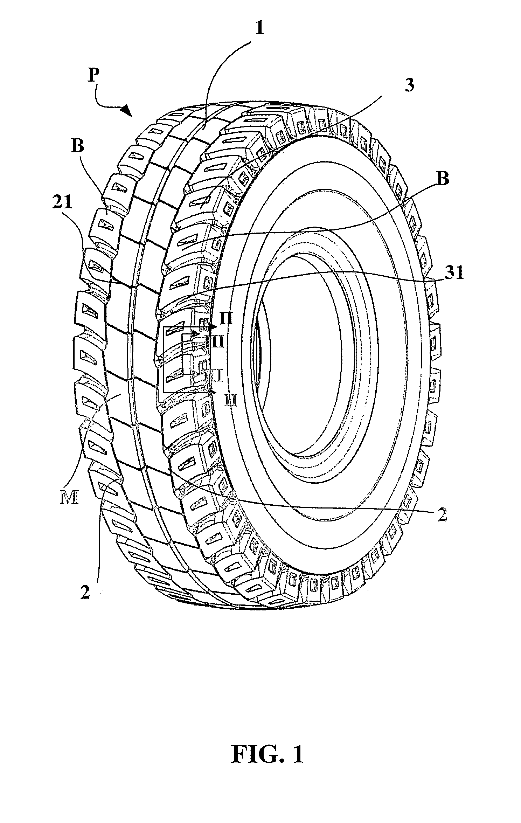

Sur la figure 1 on distingue une vue perpective d'un pneumatique P utilisé dans la méthode selon l'invention destiné à équiper un essieu moteur d'un engin de génie civil de type Dumper. Ce pneumatique de dimension 40.00 R 57 comprend une bande de roulement 1 de largeur L (égale à 970 mm) pourvue d'une sculpture divisant axialement (c'est-à-dire dans la direction de sa largeur) ladite bande en trois parties :
une partie médiane M s'étendant entre deux rainures 2 d'orientation générales circonférentielle, cette partie médiane M ayant une largeur égale à 410 mm (soit 42 % de L) ;
deux parties B formant les bords de la bande de part et d'autre de la partie médiane M.

La partie médiane M est pourvue d'une pluralité de rainures 21 d'orientation générale transversale ; chacune de ces rainures 21 étant délimitée par des faces de gomme qui dans le cas présent présentent des inclinaisons nulles avec une perpendiculaire à la surface de roulement.

Chaque partie bord B est formée par une pluralité de blocs de gomme 3 espacés les uns des autres dans la direction circonférentielle par des rainures 31 d'orientation générale transversale (c'est-à-dire faisant un angle inférieur à 45° avec la direction axiale du pneumatique correspondant à la largeur de la bande). Chaque rainure transversale 31 est délimitée par des faces de gomme en vis-à-vis, lesquelles selon le sens de roulage adopté sont soit des faces d'attaque (c'est-à-dire des faces rentrant les premières dans le contact avec le sol en roulage) soit des faces de fuite (c'est-à-dire sortant en dernier le contact avec le sol en roulage).

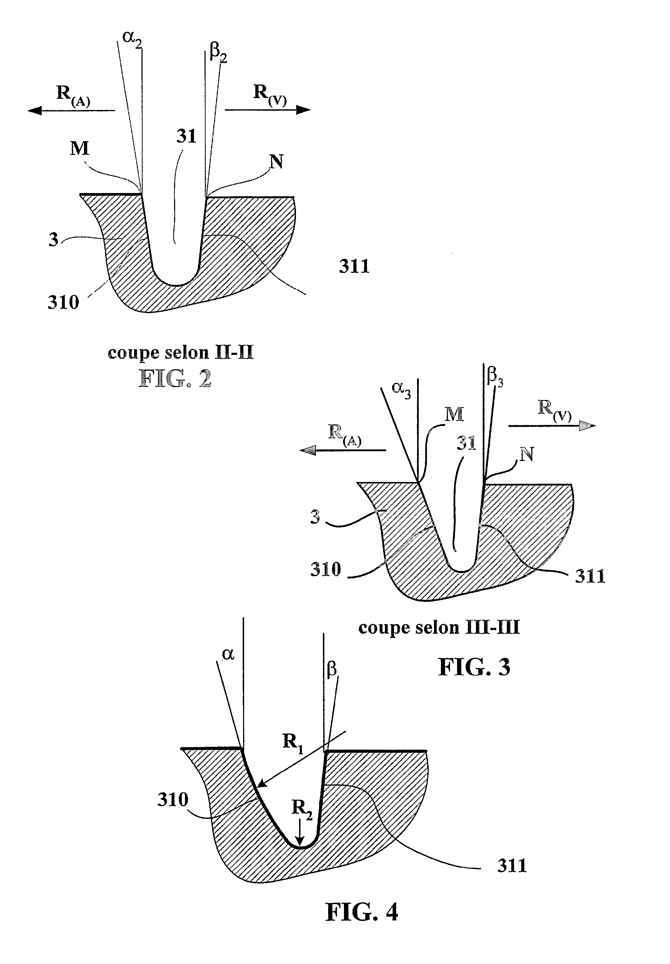

En se reportant à la figure 2 montrant une coupe selon la ligne II-II de la présente bande de roulement au niveau d'un bord et à la figure 3 montrant une autre coupe selon la ligne III-III prise axialement à l'extérieur de la coupe selon la ligne II-II, on voit que les faces 310 et 311 en vis-à-vis délimitant les rainures transversales 31 du bord B font, avec une perpendiculaire à la surface de roulement, des angles α2 , β2, α3, β3 qui sont différents pour chacun desdits plans de coupe. Les différences entre ces angles (α2 -β2) et (α3 -β3) sont respectivement égales à 5° et à 16°.

On observe qu'en allant axialement vers l'extérieur de la bande, l'écart d'inclinaison entre les faces en vis-à-vis augmente.

En fonction de l'usage de ce pneumatique, c'est-à-dire en fonction du type d'usage A ou V comme précédemment défini, on détermine un sens de rotation préférentiel dudit pneumatique qui correspond donc à un sens de montage sur l'essieu moteur sur le véhicule.

Si l'usage est de type A, c'est-à-dire que le véhicule roule en pleine charge sur une pente ascendante et revient en suivant le même itinéraire, le pneumatique ayant la sculpture décrite précédemment est monté de manière que la face 310, faisant un angle α1 sur la coupe selon II-II, soit une face de fuite (l'arête formée par cette face avec la surface de roulement repérée sur la figure 2 par la lettre M sort du contact en dernier). Dans ce cas, le sens de roulage est matérialisé par la flèche R(A) dirigée du point N vers le point M.

Si l'usage est de type V, c'est-à-dire que le véhicule roule en pleine charge et sous couple freineur sur une pente descendante et remonte la même pente à vide, le sens de montage doit être l'inverse de celui donné pour un usage de type A. En conséquence, le sens de roulage est, pour l'usage de type V matérialisé par la flèche R(V) dirigée du point M vers le point N.

Dans une autre variante, au moins une face 310 (ou 311) présente une inclinaison qui n'est pas constante quel que soit la position dans l'épaisseur de la bande de roulement. Par exemple, la figure 4 montre une coupe sur un bord d'une sculpture d'une bande de roulement selon laquelle, la face 310 a une forme cylindrique avec un premier rayon R1 de la surface de roulement à l'état neuf suivi d'une autre forme cylindrique avec un deuxième rayon R2, ce dernier rayon étant sensiblement plus petit que R1. Ainsi, l'angle α de la face 310 avec une perpendiculaire à la surface de roulement augmente progressivement avec la position dans l'épaisseur de la bande. Cette disposition est particulièrement avantageuse puisqu'elle permet d'augmenter l'écart d'inclinaison entre les faces 310 et 311 en vis-à-vis au fur et à mesure de l'usure de la bande de roulement et d'augmenter encore le gain en usure. Préférentiellement, l'angle initial α de la face 310 près de la surface de roulement à l'état neuf est supérieur à l'angle β de la face en vis-à-vis.

Par ailleurs, les pneumatiques utilisés dans la méthode selon l'invention peuvent avantageusement comporter des moyens de repérage d'une direction préférentielle de rotation en fonction du type d'utilisation principale du véhicule sur lequel il est monté (soit de type A, montée en charge sous couple moteur et descente à vide sous couple freineur, soit de type V, montée à vide et descente sous charge sous couple freineur).

## Revendications

1. Méthode d'équipement en pneumatiques de chaque essieu moteur d'un véhicule portant de lourdes charges permettant de réduire les usures irrégulières desdits pneumatiques, cette méthode consistant à :
- choisir des pneumatiques de dimensions appropriées pour ledit véhicule, ces pneumatiques étant pourvus d'une bande de roulement (1) de largeur maximale L dont une surface externe forme une surface de roulement, cette bande étant elle même pourvue d'une sculpture comprenant une pluralité d'éléments de relief (3) délimitant au moins une pluralité de rainures orientées transversalement (31), chaque rainure transversale étant délimitée par une première face et une seconde face de gomme (310, 311) en vis-à-vis, cette bande de roulement comprenant :
• une partie médiane (M) de largeur comprise entre 20 et 50% de la largeur L de la bande de roulement, cette partie pouvant être pourvue de rainures d'orientation générale transversale (21) délimitées par des faces de gomme ;
• axialement de part et d'autre de la partie médiane (M), des parties bords (B) comportant chacune une pluralité de rainures transversales (31), chaque rainure transversale (31) étant délimitée par une première face et une seconde face de gomme (310, 311), la première face étant inclinée par rapport à une perpendiculaire à la surface de roulement avec un angle α différent de l'angle d'inclinaison β de la seconde face en vis-à-vis ;
ladite méthode étant **caractérisée par** les étapes suivantes:
- déterminer le type de parcours effectué par ledit véhicule, soit de type **A** (c'est-à-dire montée en charge sous couple moteur et descente à vide sous couple freineur), soit de type **V** (c'est-à-dire montée à vide et descente sous charge sous couple freineur) ;
- lorsque le tracé est du type **A,** monter sur chaque essieu moteur des pneumatiques de façon que pour chaque rainure transversale (31) des parties bord (B) de la bande de roulement l'angle d'inclinaison des faces de gomme délimitant les rainures transversales entrant la première dans le contact soit inférieur à l'angle d'inclinaison des faces de gomme en vis-à-vis délimitant les mêmes rainures transversales **ou**
- lorsque le tracé est du type **V,** montage sur chaque essieu moteur des pneumatiques de façon que pour chaque rainure transversale (31) des parties bord (B) de la bande de roulement l'angle d'inclinaison de la face de gomme délimitant ladite rainure transversale entrant la première dans le contact soit supérieur à l'angle d'inclinaison de la face de gomme en vis-à-vis délimitant ladite rainure transversale.

2. Méthode d'équipement en pneumatiques selon la revendication 1 **caractérisée en ce que**, chaque pneumatique comprend des premiers moyens de repérage de la direction préférentielle de rotation en utilisation principale de type A, montée en charge sous couple moteur et descente à vide sous couple freineur, sur un véhicule, et des seconds moyens de repérage de la direction préférentielle de rotation en utilisation principale de type V, montée à vide et descente sous charge sous couple freineur.

3. Méthode d'équipement en pneumatiques selon la revendication 2 **caractérisée en ce que**, la partie médiane (M) de la bande de roulement (1) est pourvue d'une pluralité de rainures transversales (21) délimitées par des premières et des secondes faces de gomme (310, 311) dont la différence d'inclinaison par rapport à une perpendiculaire à la surface de roulement est inférieure à la différence d'inclinaison entre les premières et les secondes faces de gomme délimitant les rainures transversales (31) sur les bords (B) de ladite bande.

## Patentansprüche

1. Verfahren zum Ausrüsten jeder Antriebsachse eines schwere Lasten tragenden Fahrzeugs mit Luftreifen, das es ermöglicht, die unregelmäßigen Abnutzungen der Luftreifen zu verringern, wobei dieses Verfahren darin besteht:
- Luftreifen mit für das Fahrzeug geeigneten Abmessungen zu wählen, wobei diese Luftreifen mit einem Laufstreifen (1) maximaler Breite L versehen sind, von dem eine Außenfläche eine Lauffläche bildet, wobei dieser Streifen selbst mit einem Profil versehen ist, das eine Vielzahl von Reliefelementen (3) enthält, die mindestens eine Vielzahl von quer ausgerichteten Rillen (31) begrenzen, wobei jeder Querrille von einer ersten und einer zweiten Gummiseite (310, 311) begrenzt wird, die einander gegenüberliegen, wobei dieser Laufstreifen enthält:
• einen Mittelbereich (M) einer Breite zwischen 20 und 50% der Breite L des Laufstreifens, wobei dieser Bereich mit Rillen von allgemeiner Querausrichtung (21) versehen sein kann, die von Gummiseiten begrenzt werden;
• axial zu beiden Seiten des Mittelbereichs (M) Randbereiche (B), die je eine Vielzahl von Querrillen (31) aufweisen, wobei jede Querrille (31) von einer ersten und einer zweiten Gummiseite (310, 311) begrenzt wird, wobei die erste Seite bezüglich einer Lotrechten zur Lauffläche um einem Winkel α anders als der Neigungswinkel β der zweiten gegenüberliegenden Seite geneigt ist;
wobei das Verfahren durch die folgenden Schritte gekennzeichnet ist:
- Bestimmen der Art der vom Fahrzeug durchgeführten Fahrt, entweder vom Typ A (d.h. Bergauffahrt unter Last unter Antriebsdrehmoment und Bergabfahrt leer unter Bremsmoment), oder vom Typ V (d.h. Bergauffahrt leer und Bergabfahrt unter Last unter Bremsmoment);
- wenn der Verlauf vom Typ A ist, Montieren von Luftreifen auf jede Antriebsachse derart, dass für jede Querrille (31) der Randbereiche (B) des Laufstreifens der Neigungswinkel der die Querrillen begrenzenden Gummiseiten, die als erste in den Kontakt kommen, kleiner als der Neigungswinkel der gegenüberliegenden Gummiseiten ist, die die gleichen Querrillen begrenzen, oder
- wenn der Verlauf vom Typ V ist, Montieren von Luftreifen auf jede Antriebsachse derart, dass für jede Querrille (31) der Randbereiche (B) des Laufstreifens der Neigungswinkel der die Querrille begrenzenden Gummiseite, die als erste in den Kontakt kommt, größer als der Neigungswinkel der gegenüberliegenden Gummiseite ist, die die Querrille begrenzt.

2. Verfahren zur Ausrüstung mit Luftreifen nach Anspruch 1, **dadurch gekennzeichnet, dass** jeder Luftreifen erste Markierungseinrichtungen der bevorzugten Drehrichtung bei der Hauptnutzung des Typs A, Bergauffahrt unter Last unter Antriebsmoment und Bergabfahrt leer unter Bremsmoment, bei einem Fahrzeug, und zweite Markierungseinrichtungen der bevorzugten Drehrichtung bei der Hauptnutzung des Typs V, Bergauffahrt leer und Bergabfahrt unter Last unter Bremsmoment enthält.

3. Verfahren zur Ausrüstung mit Luftreifen nach Anspruch 2, **dadurch gekennzeichnet, dass** der Mittelbereich (M) des Laufstreifens (1) mit einer Vielzahl von Querrillen (21) versehen ist, die von ersten und zweiten Gummiseiten (310, 311) begrenzt werden, deren Neigungsdifferenz bezüglich einer Lotrechten zur Lauffläche geringer als die Neigungsdifferenz zwischen den ersten und zweiten Gummiseiten ist, die die Querrillen (31) an den Rändern (B) des Streifens begrenzen.

## Claims

1. A method for fitting tyres to each driving axle of a vehicle carrying heavy loads, which enables a reduction of irregular wear in such tyres, said method consisting in:
- choosing tyres for said vehicle, these tyres being provided with a tread (1) of maximum width L an outer surface of which forms a rolling surface, the tread itself being provided with a pattern comprising a plurality of relief elements (3) which delimit at least a plurality of grooves (31) extending transversely, each transverse groove being delimited by a first face and a second face (310, 311) of rubber opposite one another, the tread comprising:
• a median portion (M) of width between 20 and 50% of the width L of the tread, this portion being able to be provided with grooves (21) of substantially transverse orientation delimited by rubber faces;
• axially on either side of the median portion (M), edge portions (B) each comprising a plurality of transverse grooves (31), each transverse groove (31) being delimited by a first and a second rubber face (310, 311), the first face being inclined relative to a perpendicular to the rolling surface with an angle α different from the angle of inclination β of the second face opposite it;
this method being **characterized by** the following steps:
- determining the type of journey made by said vehicle, namely either type **A** (i.e. ascending under load with a driving torque and descending empty with a braking torque), or type **V** (i.e. ascending empty and descending under load with a braking torque);
- when the route is of type **A,** fitting to each driving axle tyres such that for each transverse groove (31) in the edge portions (B) of the tread, the angle of inclination of the rubber face delimiting each transverse groove which first comes into ground contact is smaller than the angle of inclination of the rubber face opposite delimiting the same transverse groove, **or**
- when the route is of type **V,** fitting to each driving axle tyres such that for each transverse groove (31) in the edge portions (B) of the tread, the angle of inclination of the rubber face delimiting said transverse groove which first comes into ground contact is larger than the angle of inclination of the rubber face opposite delimiting the same transverse groove.

2. A method for fitting tyres according to claim 1 wherein each tyre comprises first means for marking a preferred rotation direction in main use of type **A,** ascending under load with a driving torque and descending empty with a braking torque, and second means for marking a preferred rotation direction in main use of type **V,** ascending empty and descending under load with a braking torque.

3. A method for fitting tyres according to claim 2 wherein the median portion (M) of the tread (1) is provided with a plurality of transverse grooves (21) delimited by first and second rubber faces (310, 311) whose inclination difference relative to a perpendicular to the rolling surface is smaller than the inclination difference between the first and second rubber faces that delimit the transverse grooves (31) at the edges (B) of said tread.
